# EUROPÄISCHE PATENTSCHRIFT

(11) **EP 1 747 930 B1**
(45) Veröffentlichungstag und Bekanntmachung des Hinweises auf die Patenterteilung: **28.11.2007**
(21) Anmeldenummer: 06013794.0
(22) Anmeldetag: 04.07.2006
(51) Int. Cl.: B60K 7/00, B62D 7/02, B60K 17/30

(54) **Antriebseinheit**
Drive unit
Unité d'entraînement

(30) Priorität: 28.07.2005 DE 102005035312
(43) Veröffentlichungstag der Anmeldung: 31.01.2007
(73) Patentinhaber: ZF FRIEDRICHSHAFEN Aktiengesellschaft, 88038 Friedrichshafen (DE)
(72) Erfinder: Scharfenberg, Stephan, 99869 Tüttleben (DE)

(56) Entgegenhaltungen:
- WO-A-20/05077696
- DE-A1- 10 130 100
- DE-A1- 10 328 651
- DE-A1- 19 949 351
- DE-U1-6202005 020 62

## Beschreibung

Die Erfindung bezieht sich auf eine Antriebseinheit nach der im Oberbegriff von Anspruch 1 näher definierten Art.

Gattungsgemäße Antriebseinheiten werden beispielsweise zum Antrieb eines Flurförderzeuges oder in der Lagertechnik verwendet, wobei ein Antriebsmotor ein Fahrzeugrad im Sinne eines Antriebs und ein Lenkmotor das Fahrzeugrad im Sinne einer Lenkbewegung antreiben.

Die DE 199 49 351 A1, die den Oberbegriff des Anspruchs 1 bildet, offenbart eine Antriebseinheit mit einem Antriebsmotor und einem Lenkmotor, wobei ein Untersetzungsgetriebe zwischen dem Antriebsmotor und dem Lenkmotor angeordnet ist, und der Antriebsmotor über dieses Untersetzungsgetriebe und ein Kegelradgetriebe das Antriebsrad antreibt. Der Lenkmotor treibt über ein Lenkgetriebe das Fahrzeugrad im Sinne einer Lenkbewegung an. Der Antriebsmotor, der Lenkmotor sowie die beiden Untersetzungsgetriebe sind koaxial zueinander angeordnet.

Die DE 103 28 651 A1 offenbart eine Antriebseinheit mit einem Antriebsmotor, welcher direkt ein Stirnradgetriebe antreibt, welches ein Fahrzeugrad antreibt, und einen Lenkmotor, welcher über ein Lenkgetriebe das Fahrzeugrad im Sinne einer Lenkdrehbewegung antreibt, wobei der Lenkmotor und der Antriebsmotor koaxial und direkt benachbart angeordnet sind.

Der vorliegenden Erfindung liegt die Aufgabe zugrunde, eine Antriebseinheit mit einem koaxial angeordneten Fahr- und Lenkmotor zu schaffen, welche ein Fahrzeugrad im Sinne einer Antriebsbewegung und einer Lenkbewegung antreibt, wobei das Fahrzeugrad bremsbar ist.

Die Aufgabe wird mit einer, auch die kennzeichnenden Merkmale des Hauptanspruchs aufweisenden, gattungsgemäßen Antriebseinheit gelöst.

Erfindungsgemäß weist die Antriebseinheit einen Lenkmotor und einen Fahrmotor auf, welche koaxial zueinander angeordnet sind, wobei zwischen dem Lenkmotor und den Fahrmotor ein Untersetzungsgetriebe angeordnet ist. Zusätzlich zum Untersetzungsgetriebe ist zwischen dem Lenkmotor und dem Fahrmotor eine Bremse angeordnet, welche beispielsweise als Negativbremse ausgeführt sein kann, was durch Betätigung im Schließsinne durch eine Federkraft möglich ist, und welche über hydraulische oder elektrische Betätigung verfügt, wobei die Bremse als Lamellen-, Backen-, Scheiben- oder Bandbremse ausgeführt sein kann. Es besteht die Möglichkeit, die Reibbeläge der Bremse als trockenlaufende Bremse auszuführen, wobei in diesem Fall die Bremse ohne Kühl- und Schmiermittel betrieben wird, und es besteht die Möglichkeit, die Bremse als naßlaufende Bremse auszubilden, wobei beispielsweise Lamellen der Bremse in einem Kühlschmiermittel angeordnet sind.

In einer weiteren Ausgestaltungsform der Erfindung ist das drehende Bauteil der Bremse zumindest mittelbar mit der Antriebswelle des Fahrmotors drehfest und ein stehendes Bauteil der Bremse zumindest mittelbar mit dem Gehäuse des Fahrmotors verbunden. Dadurch ist es möglich, die Bremse kompakt auszuführen, da die Bremse ausschließlich die Drehmomente des Antriebsmotors bremsen muß. Durch die Verwendung eines Untersetzungsgetriebes zwischen dem Lenkmotor und dem Fahrmotor kann der Fahrmotor in seinen Abmessungen kompakt ausgeführt werden, da er ein geringeres Drehmoment aufbringen muß.

Es besteht auch die Möglichkeit, die Bremse mit dem Untersetzungsgetriebe zu verbinden, wobei beispielsweise ein Planetenträger das zu bremsende Bauteil sein kann.

In einer weiteren Ausgestaltungsform ist der Lenkmotor direkt unterhalb, in Richtung Antriebsrad benachbart, zur Bremse und dem Untersetzungsgetriebe angeordnet und treibt eine Antriebswelle an, welche eine entlang der Drehachse der Antriebswelle verlaufende Bohrung aufweist. Die Antriebswelle des Lenkmotors treibt ein Lenkgetriebe an, welches beispielsweise als Wolfromgetriebe ausgeführt sein kann, um das Fahrzeugrad im Sinne einer Drehbewegung anzutreiben. Durch die Bohrung der Antriebswelle des Lenkmotors ist eine weitere Antriebswelle, welche in Verbindung mit dem Fahrmotor steht, angeordnet, welche über ein Stirnrad- und ein Kegelradgetriebe das Fahrzeugrad antreibt. Somit sind der Fahrmotor, das Untersetzungsgetriebe, die Bremse, der Lenkmotor und das Lenkgetriebe koaxial angeordnet. Das Untersetzungsgetriebe kann als Planetengetriebe ausgeführt sein, welches gerad- oder schrägverzahnt sein kann. Der Planetenträger dieses Planetengetriebes kann in einer weiteren Ausgestaltungsform eine Außenverzahnung aufweisen, welche als Träger der drehenden Lamellen der Bremse dient.

Indem dem Fahrmotor ein erstes Untersetzungsgetriebe, vorzugsweise in Form eines Planetengetriebes, ein zweites Untersetzungsgetriebe, vorzugsweise in Form eines Stirnradgetriebes, und ein drittes Untersetzungsgetriebe, vorzugsweise in Form eines Kegelradgetriebes, nachgeschaltet ist, sind sehr hohe Übersetzungen des Fahrantriebs möglich, wodurch einerseits der Fahrmotor kompakt oder die Stirnradstufe mit einer geringeren Teilübersetzung ausgeführt sein können, wodurch der Hüllkreis bei einer Lenkbewegung des Antriebs verringert wird.

Weitere Merkmale sind der Figuren-Beschreibung zu entnehmen.

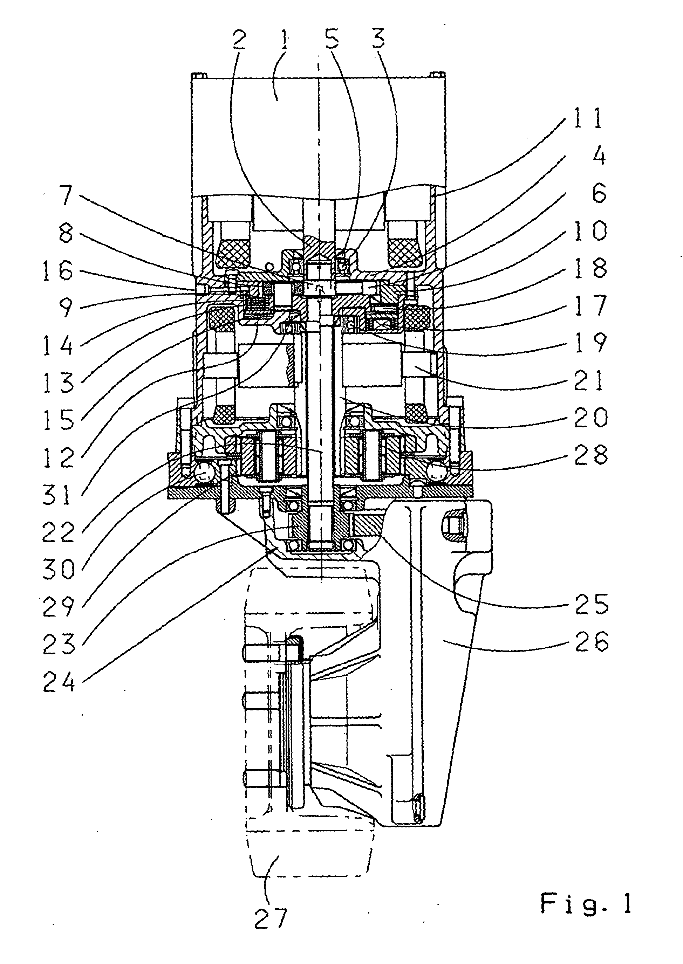

Die einzige Figur zeigt einen Fahrmotor 1, welcher als Elektromotor ausgeführt ist und eine Antriebswelle 2 aufweist. Die Antriebswelle 2 ist über ein Lager 3 in einem Lagerschild 4 gelagert. Der Fahrmotor 1 ist über Dichtelemente 5 vom Übersetzungsgetriebe 6 getrennt. Es besteht jedoch auch die Möglichkeit, den Fahrmotor 1 und das Untersetzungsgetriebe 6 mit gemeinsamem Kühl- und Schmiermittel zu betreiben. Auf der Antriebswelle 2 ist ein inneres Zentralrad 7 des Untersetzungsgetriebes 6 angeordnet, welches auf der Antriebswelle 2 aufgepreßt oder einstückig aus dieser geformt sein kann. Das innere Zentralrad 7 kämmt mit Planetenräder 8 des Untersetzungsgetriebes 6, welches als Planetengetriebe ausgeführt ist. Die Planetenräder 8 sind auf einem Planetenträger 9 gelagert und kämmen mit einem äußeren Zentralrad 10, welches drehfest im Motorgehäuse 11 gehalten ist. Das Lagerschild 4 sowie eine topfförmige Ausbildung des Gehäuses 12 bilden einen Raum, in welchem das Untersetzungsgetriebe 6 und die Bremse 13 angeordnet sind. Der Planetenträger 9 weist auf der linken Seite der Figur an seinem äußeren Bereich eine Mitnahmeverzahnung 14 auf, in welcher die drehenden Lamellen der Bremse 13 angeordnet sind. Die stehenden Lamellen der Bremse 13 sind im Gehäuse 11 angeordnet. Eine Feder 15 wirkt auf die Bremse 13, wodurch die Bremse 13 als Negativbremse ausgeführt ist. Durch Druckbeaufschlagung am Anschluß 16 kann die Bremse 13 im Öffnungssinne betätigt werden. Auf der rechten Seite der Figur ist der Planetenträger 9 als Rotor für eine elektromagnetische Bremse ausgebildet. Durch Betätigung des Elektromagneten 17 wird die Bremse mit dem Rotor 18 geöffnet. Das topfförmige Bauteil 12 weist eine Lagerung 19 auf, welche eine Antriebswelle 20 des Lenkmotors 21 lagert. Die Antriebswelle 20 ist mit einer zentralen Bohrung versehen, in welcher eine weitere Antriebswelle 22 angeordnet ist, welche drehfest oder einstückig mit dem Planetenträger 9 verbunden ist. Die weitere Antriebswelle 22 weist an ihrem, dem Antriebsmotor entgegengesetzten Ende ein Stirnrad 23 eines Stirnradgetriebes 24 auf, welches ein weiteres Stirnrad 25 antreibt. Das Stirnrad 25 treibt über ein nicht gezeigtes Kegelradgetriebe innerhalb des Gehäuses 26 das Antriebsrad 27 an. Indem der Fahrmotor 1 durch das Untersetzungsgetriebe 6, das Stirnradgetriebe 24 und das nicht gezeigte Kegelradgetriebe mit dem Antriebsrad 27 verbunden ist, ist es möglich, das Stirnradgetriebe 24 in seiner radialen Erstreckung kompakter auszuführen, wodurch der Hüllkreis, welcher durch die Lenkbewegung des Gehäuses 26 benötigt wird, verringert werden kann. Die Antriebswelle 20 des Lenkmotors 21 treibt über Planetenräder 28 im Sinne eines Wolfromgetriebes das Hohlrad 29 an, wodurch das Gehäuse 26 gegenüber dem Gehäuse 11 eine Drehbewegung ausführt. Hierzu ist zwischen dem Gehäuse 26 und dem Gehäuse 11 eine Lagerung 30 angeordnet.

In einer weiteren Ausgestaltungsform besteht die Möglichkeit, das Gehäuse 11 auch mehrstückig auszuführen. Das Untersetzungsgetriebe 6 kann gerad- oder schrägverzahnt ausgeführt sein. Zwischen dem Lenkmotor und der Bremse kann ein weiteres Dichtmittel 31 angeordnet sein, wodurch das Untersetzungsgetriebe 6 und die Bremse 13 im gemeinsamen Schmiermittel angeordnet sind. Das äußere Zentralrad 10 kann als Druckplatte für die Lamellen der Bremse 13 oder als Zylinder mit einem Kolben zum Betätigen der Bremse 13 im Öffnungssinne ausgebildet sein. Durch die erfindungsgemäße Ausbildung der Antriebseinheit kann der Antrieb mit einem geringen Hüllkreis kompakt ausgeführt werden.

### Bezugszeichen

- 1: Fahrmotor
- 2: Antriebswelle
- 3: Lager
- 4: Lagerschild
- 5: Dichtelemente
- 6: Untersetzungsgetriebe
- 7: inneres Zentralrad
- 8: Planetenräder
- 9: Planetenträger
- 10: äußeres Zentralrad
- 11: Motorgehäuse
- 12: topfförmiges Bauteil
- 13: Bremse
- 14: Aufnahme
- 15: Feder
- 16: Anschluß
- 17: Elektromagnet
- 18: Rotor
- 19: Lagerung
- 20: Antriebswelle
- 21: Lenkmotor
- 22: weitere Antriebswelle
- 23: Stirnrad
- 24: Stirnradgetriebe
- 25: Stirnrad
- 26: Gehäuse
- 27: Antriebsrad
- 28: Planetenräder
- 29: Hohlrad
- 30: Lagerung
- 31: Dichtmittel

## Patentansprüche

1. Antriebseinheit mit einem Lenkmotor (21) und einem Fahrmotor (1), welche koaxial zueinander angeordnet sind, wobei zwischen dem Lenkmotor (21) und dem Fahrmotor (1) ein Untersetzungsgetriebe (6) angeordnet ist, über welches der Antriebsmotor (1) ein Fahrzeugrad (27) und der Lenkmotor (21) dieses Fahrzeugrad (27) im Sinne einer Lenkbewegung um eine Drehachse antreibt, **dadurch gekennzeichnet, dass** zwischen dem Fahrmotor (1) und dem Lenkmotor (21) eine Bremse (13) angeordnet ist, über welche das Fahrzeugrad (27) bremsbar ist.

2. Antriebseinheit nach Anspruch 1, **dadurch gekennzeichnet, dass** ein drehendes Bauteil (9) der Bremse (13) mit einer Antriebswelle (2) des Fahrmotors (1) und ein stehendes Bauteil der Bremse (13) mit einem Motorgehäuse (11) in Verbindung stehen.

3. Antriebseinheit nach Anspruch 1, **dadurch gekennzeichnet, dass** die Bremse (13) als Lamellenbremse ausgeführt ist, welche über eine Federkraft im Schließsinne und durch Druckbeaufschlagung im Öffnungssinne betätigbar ist.

4. Antriebseinheit nach Anspruch 1, **dadurch gekennzeichnet, dass** die Bremse (13) als Elektromagnetbremse ausgeführt ist, wobei das drehende Bauteil als Rotor (18) ausgebildet ist.

5. Antriebseinheit nach Anspruch 1, **dadurch gekennzeichnet, dass** das drehende Bauteil (9) der Bremse (13) als Planetenträger des Untersetzungsgetriebes (6) ausgebildet ist.

6. Antriebseinheit nach Anspruch 1, **dadurch gekennzeichnet, dass** die Antriebswelle (20) des Lenkgetriebes eine entlang ihrer Drehachse angeordnete Bohrung aufweist, wobei eine weitere Antriebswelle (22), welche mit dem Antriebsmotor (1) in Verbindung steht, in der Bohrung der Antriebswelle (20) des Lenkmotors (21) angeordnet ist.

7. Antriebseinheit nach Anspruch 1, **dadurch gekennzeichnet, dass** der Antriebsmotor (1) über das Untersetzungsgetriebe (6) ein Stirnradgetriebe (24) antreibt, dessen angetriebenes Stirnrad (23) koaxial zum Antriebsmotor (1), dem Lenkmotor (21) und dem Lenkgetriebe angeordnet ist.

8. Antriebseinheit nach Anspruch 7, **dadurch gekennzeichnet, dass** das Stirnradgetriebe (24) über ein Kegelradgetriebe das Antriebsrad (27) antreibt.

9. Antriebseinheit nach Anspruch 1, **dadurch gekennzeichnet, dass** das Untersetzungsgetriebe (6), der Fahrmotor (1) und der Lenkmotor (21) sowie die Bremse (13) in einem gemeinsamen Gehäuse (11) angeordnet sind.

10. Antriebseinheit nach Anspruch 1, **dadurch gekennzeichnet, dass** die Bremse (13) und das Untersetzungsgetriebe (6) in einem Raum angeordnet sind, welcher von einem Lagerschild (4) mit einem Motorlager (3) des Antriebsmotors (1) und dem Gehäuse (11) des Antriebsmotors gebildet wird.

## Claims

1. The invention relates to a drive unit with a steering motor (21) and a driving motor (1), which are arranged coaxially in relation to each other, with steering motor (21) and driving motor (1) having a reduction gear (6) arranged between them, through which the driving motor (1) drives a vehicle wheel (27) and the steering motor (21) drives said vehicle wheel (27) around a wheel axis for steering motion, **characterized in that** between driving motor (1) and steering motor (21) there is a brake (13) by means of which the vehicle wheel can be braked (27).

2. Drive unit according to claim 1, **characterized in that** a turning component (9) of the brake (13) is connected to a drive shaft (2) of the driving motor (1) and that a stationary component of the brake (13) is connected to a motor housing (11).

3. Drive unit according to claim 1, **characterized in that** the brake (13) is designed as a multidisk brake, which via a spring force can be actuated for closing and via pressure can be actuated for opening.

4. Drive unit according to claim 1, **characterized in that** the brake (13) is designed as an electromagnetic brake, with the turning part being designed as a rotor (18).

5. Drive unit according to claim 1, **characterized in that** the turning part (9) of the brake (13) is constituted by the planet carrier of the reduction gear (6).

6. Drive unit according to claim 1, **characterized in that** the drive shaft (20) of the steering gear features a bore arranged alongside its turning axis, with another drive shaft (22), which is connected to the driving motor (1), being arranged in the bore of the drive shaft (20) of the steering motor (21).

7. Drive unit according to claim 1, **characterized in that** the driving motor (1) via the reduction gear (6) drives a spur gear system (24), the driven spur gear (23) of which is arranged coaxially to the driving motor (1), the steering motor (21), and the steering gear.

8. Drive unit according to claim 7, **characterized in that** the spur gear system (24) drives the drive wheel (27) via a bevel gear.

9. Drive unit according to claim 1, **characterized in that** the reduction gear (6), the driving engine (1), the steering motor (21) and the brake (13) are arranged in a common housing (11).

10. Drive unit according to claim 1, **characterized in that** the brake (13) and the reduction gear (6) are arranged in a space formed by a bearing bracket (4) with a motor bearing (3) of the driving motor (1) and the housing (11) of the engine.

## Revendications

1. Unité d'entraînement comprenant un moteur de direction (21) et un moteur de propulsion (1), qui sont disposés coaxialement l'un à l'autre, dans laquelle, entre le moteur de direction (21) et le moteur de propulsion (1) est disposé un mécanisme réducteur (6) par l'intermédiaire duquel le moteur d'entraînement (1) entraîne une roue (27) du véhicule et le moteur de direction (21) entraîne cette roue (27) du véhicule pour un mouvement de direction autour d'un axe de rotation, **caractérisée en ce que**, entre le moteur de propulsion (1) et le moteur de direction (21), est disposé un frein (13) par l'intermédiaire duquel la roue (27) du véhicule peut être freinée.

2. Unité d'entraînement selon la revendication 1, **caractérisée en ce qu**'un composant rotatif (9) du frein (13) est en liaison avec un arbre d'entraînement (2) du moteur de propulsion (1) et un composant fixe du frein (13) est en liaison avec le carter (11) du moteur.

3. Unité d'entraînement selon la revendication 1,**caractérisée en ce que** le frein (13) est constitué par un frein à disque qui peut être actionné dans le sens de la fermeture par une force de ressort et dans le sens de l'ouverture par une sollicitation de pression.

4. Unité d'entraînement selon la revendication 1, **caractérisée en ce que** le frein (13) est constitué par un frein électromagnétique, le composant tournant étant constitué par un rotor (18).

5. Unité d'entraînement selon la revendication 1, **caractérisée en ce que** le composant tournant (9) du frein (13) est constitué par un porte-satellites du mécanisme réducteur (6).

6. Unité d'entraînement selon la revendication 1, **caractérisée en ce que** l'arbre d'entraînement (20) du mécanisme de direction comporte un alésage disposé le long de son axe de rotation, un autre arbre d'entraînement (22), qui est en liaison avec le moteur d'entraînement (1), étant disposé dans le l'alésage de l'arbre d'entraînement (20) du moteur de direction (21).

7. Unité d'entraînement selon la revendication 1, **caractérisée en ce que** le moteur d'entraînement (1) entraîne, par l'intermédiaire du mécanisme réducteur (6), une transmission à roues droites (24) dont la roue droite entraînée (23) est disposée coaxialement au moteur d'entraînement (1), au moteur de direction (21) et au mécanisme de direction.

8. Unité d'entraînement selon la revendication 7, **caractérisée en ce que** la transmission à roues droites (24) entraîne la roue d'entraînement (27) par l'intermédiaire d'un mécanisme à roues coniques.

9. Unité d'entraînement selon la revendication 1, **caractérisée en ce que** le mécanisme réducteur (6), le moteur de propulsion (1) et le moteur de direction (21) ainsi que le frein (13) sont disposés dans un carter commun (11).

10. Unité d'entraînement selon la revendication 1, **caractérisée en ce que** le frein (13) et le, mécanisme réducteur (6) sont disposés dans un espace qui est formé par un flasque palier (4) portant le palier (3) du moteur d'entraînement (1) et par le carter (11) du moteur d'entraînement.
